# EUROPEAN PATENT APPLICATION

(11) **EP 2 284 359 A1**
(43) Date of publication of application: **16.02.2011**
(21) Application number: 09008933.5
(22) Date of filing: 08.07.2009
(51) Int. Cl.: E21B 43/16, C09K 8/58, C09K 8/60

(54) **Method of enhanced oil recovery from geological reservoirs**

(71) Applicant: Bergen Teknologioverforing AS, 5006 Bergen (NO)
(72) Inventor: Graue, Arne, 5179 Godvik (NO)
(74) Representative: Hertz, Oliver

(57) **Abstract**

A method of enhanced oil recovery of remaining reservoir oil (1) from a subterranean geological reservoir (2), which has been subjected to at least one of a primary oil recovery and a secondary oil recovery, said enhanced oil recovery method comprises the steps of oil flooding the geological reservoir (2) using flooding oil (3), and recovering the reservoir oil (1) from the geological reservoir (2). Preferably, the flooding oil (3) comprises heavy crude oil being recovered from another geological reservoir. Furthermore, the invention comprises using heavy crude oil (3) for oil flooding a subterranean geological reservoir (2) and enhanced oil recovery from the geological reservoir (2).

## Description

### Technical field

The invention relates to a method of enhanced oil recovery from a subterranean geological reservoir, in particular to a method of recovery of reservoir oil remaining in the geological reservoir after a primary oil recovery or a secondary, fluid flooding-based oil recovery. Furthermore, the present invention relates to a new method of using heavy crude oil.

### Technical background of the invention

Enhanced oil recovery (EOR) comprises techniques for increasing the amount of crude oil that can be extracted from a geological reservoir, like e.g. an oil field, after a primary or secondary oil recovery. Primary oil recovery comprises collection of oil, which is supplied to a production well under the influence of the internal pressure of the geological formation, while secondary oil recovery comprises applying an additional pressure to the reservoir by a flooding fluid, like e.g. water or a gas. While primary and secondary recovery yields 20 to 40 % of the original crude oil only, EOR allows recovering an increased amount up to 50 - 90 %.

One of the conventional EOR techniques comprises chemical injection, i.e. the injection of e.g. surfactants or polymers to the geological reservoir for various functions. Firstly, surfactants can be used for reducing the interfacial tension between the displacing fluid, e.g. water, and the remaining crude oil and thus improving the recovery thereof. Furthermore, polymers can be used for increasing the viscosity of the displacing fluid, e.g. water, so that favourable fluid mobility control in the reservoir is obtained. Another EOR technique comprises gas injection, like e.g. the injection of CO₂, natural gas or nitrogen. Depending on the pressure and temperature conditions the injected gas has a pressure effect (pushing the oil to the recovery well), a viscosity effect as well as possibly contributing to miscible oil displacement.

US 3 882 938 discloses an EOR technique which belongs to the group of chemical injection techniques. For flooding a heterogeneous reservoir having oil-containing strata of widely varying permeabilities, a soluble oil miscible with the original reservoir oil and with water and a flooding substance solution including a plugging substance are injected into the reservoir in a cyclic, alternating manner. Subsequently, for the enhanced oil recovery, the reservoir is subjected to water flooding. The plugging substance is provided for reducing the permeability of the more permeable strata of the formation. While this conventional EOR technique may have a high recovery yield due to the effect of the plugging substance, there is a serious risk of completely plugging the reservoir or parts thereof, e. g. a region surrounding the injection well. Thus, EOR with chemical injection may result in essentially increased production costs. Another disadvantage of the conventional EOR techniques relates to the fact that chemicals are injected to the reservoir, which may be critical for the environment. Injected polymers may leak from the reservoir to the environment.

### Objective of the invention

The objective of the invention is to provide an improved method of enhanced oil recovery, which is capable of avoiding disadvantages of conventional recovery techniques. In particular, it is desired to provide an enhanced oil recovery method avoiding a risk of plugging the reservoir, having an increased oil recovery efficiency and/or an improved controllability.

This objective is solved with a method comprising the features of claim 1. Preferred embodiments of the invention are defined in the dependent claims.

### Summary of the invention

According to the invention, the above objective is solved by a method of enhanced oil recovery, which is applied to a subterranean geological reservoir after a primary oil recovery, possibly followed by a further, e.g. secondary oil recovery. According to the invention, the geological reservoir is subjected to a step of oil flooding. Flooding oil is injected into the geological reservoir, so that original reservoir oil or water included in the reservoir is displaced. Furthermore, the flooding oil provides reduced mobility in predetermined zones of the reservoir so that the oil recovery from the remaining reservoir is facilitated. Further, according to the invention, the reservoir oil is recovered during or after oil flooding.

The inventive mobility control in the geological reservoir has the following advantages. As a main advantage, an increased amount of reservoir oil can be produced compared with the recovery rate of primary or secondary oil recovery or conventional EOR techniques. Injecting flooding oil results in improved sweep efficiency due to a diversion of water or other chase fluids. The recovery can be increased by at least 2 %, typically even by at least 5 % or more, e. g. 10 %. Furthermore, a change of wettability may be obtained, which further increases the oil recovery. Injection of chemicals and an eventual influence on the environment are completely avoided.

Advantageously, the inventive EOR method can be applied to any known types of oil reservoirs, in particular to fractured reservoirs, heterogeneous reservoirs or homogeneous reservoirs. The reservoir may comprise a plurality of horizontal oil-containing formations (layers). As a further advantage, the inventive EOR method can be conducted with available technical devices, in particular with a combination of at least one injection well arranged for introducing the flooding oil and at least one production well arranged for recovering the reservoir oil. All available well patterns can be used for arranging the injection and production wells. A plurality of injection and/or production wells can be used as it is known in e. g. secondary oil recovery.

According to a preferred embodiment of the invention, the EOR method is applied to a geological reservoir, which has been subjected to the primary oil recovery only. In this case, the EOR method comprises a first step of injecting flooding water to the geological reservoir. The reservoir is subjected to a water flooding before the inventive oil flooding. With this embodiment, the EOR method comprises a sequential water-oil injection. By injecting the flooding oil into water flooded fractured reservoirs, heterogeneous reservoirs or less heterogeneous reservoirs, increased oil recovery is obtained due to more favourable mobility conditions when injecting higher viscosity oil.

Advantageously, water flooding and oil flooding can be provided with alternating cycles. As an example, up to 10 cycles of water and oil flooding can be applied. The reservoir oil is recovered during or after oil flooding and/or during or after water flooding. As an advantage, the amount of original reservoir oil recovered is increased with each cycle.

Preferably, an oil injection pressure of each oil flooding cycle is increased. Accordingly, larger oil zones can be treated with each oil flooding cycle. Advantageously, repeated water-oil injections gradually will increase the water flooded areas, thus increasing the amount of recovered reservoir oil.

According to a further preferred embodiment of the invention, the flooding oil has a larger viscosity compared with the reservoir oil. According to a particularly preferred embodiment, the flooding oil comprises heavy crude oil. Heavy crude oil is a flowable crude oil having an API gravity less than 20° (its specific gravity is greater than 0.933 (g/ml)). Advantageously, natural heavy crude oil being recovered from another geological reservoir can be used for flooding the reservoir to be exploited. The inventive oil injection may serve both for the enhanced oil recovery as well as for a temporarily oil storage. All the injected oil will be moveable and can be re-recovered by e.g. a final fluid flooding, in particular final water flooding, or another available heavy crude oil recovery method.

Alternatively, the flooding oil may have the same viscosity like the reservoir oil to be recovered. It is even possible to use the reservoir oil as such which has been recovered during the primary or secondary oil recovery as flooding oil. As the mobility control obtained with the oil flooding depends on the history of previous treatments and a certain hysteresis effect can be obtained with the oil flooding, increased amounts of reservoir oil can even be recovered by reinjecting the reservoir oil.

According to a further embodiment of the invention, the flooding water may include a viscosity increasing substance. Advantageously, this may result in an improved oil recovery efficiency. According to a particularly preferred embodiment, the viscosity increasing substance results in a higher viscosity of the flooding water compared with the oil in place at the reservoir conditions. The viscosity increasing substance comprises e. g. sodium silicate, a polymer, like polyacrylamide or a gel, like polyacrylamide with a crosslinker.

The application of heavy crude oil for oil flooding a subterranean geological reservoir and enhanced oil recovery from the reservoir represents an independent subject of the invention.

### Brief description of the drawings

Further details and advantages of the invention are described in the following with reference to the attached drawings, which show in:

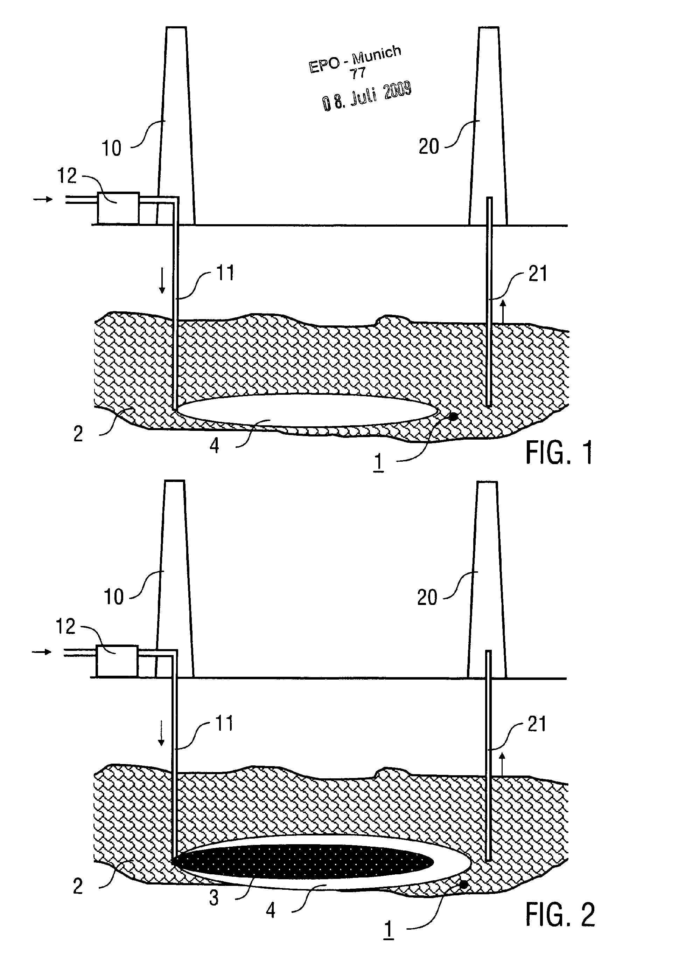

Figures 1 to 3: schematic illustrations of subsequent steps of water and oil flooding according to the invention.

### Preferred embodiments

Figure 1 schematically illustrates a subterranean geological reservoir 2 including reservoir oil 1. The reservoir 2 is a sub-terrestrial or an undersea reservoir including light crude oil, like e.g. the Ekofisk reservoir, or heavy crude oil. At least one injection well 10, which also may be horizontal, is provided for supplying a flooding fluid and in particular flooding oil to the reservoir 2. The injection well 10 is structured as it is known from conventional injection wells. It includes in particular an injection pipe 11 and an injection control device 12 being adapted for controlling the type of injection fluid and injection parameters. The injection control device 12 is configured for cycling injecting e. g. flooding oil and water.

Furthermore, at least one production well 20, which also may be horizontal, is provided in connection with the reservoir 2. Again, the production well 20 is structured as it is known from conventional production wells. In particular it includes a production line 21 between the reservoir and the surface.
Figure 1 schematically illustrates a secondary oil recovery using water flooding. Water 4 is injected through the injection line 11 into the reservoir 2. Under the pressure of the injected water 4, reservoir oil 1 is driven to the production line 21.
Figure 2 illustrates the essential step of the inventive EOR technique. After the secondary oil recovery, flooding oil 3 is injected through the injection line 11 into the reservoir 2. The flooding oil 3 replaces the flooding water 4 so that the effective injection region in the reservoir 2 is increased. As a result, further reservoir oil 1 is recovered through the production line 21.
Figure 3 schematically illustrates a further step of water flooding after the oil injection. Further flooding water 4' is injected through the injection line 11, so that the initial flooding water 4 and the flooding oil 3 are replaced in the reservoir 2.

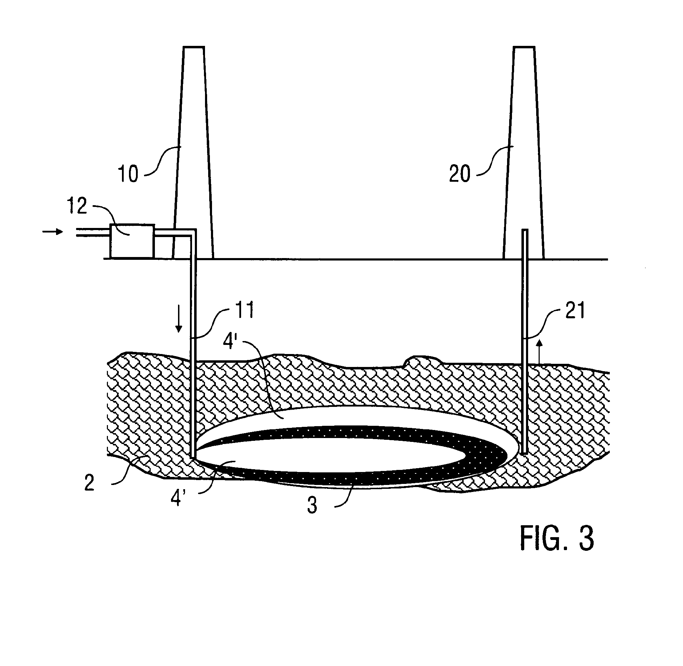

The inventive EOR method comprises the following steps. After water flooding (Figure 1), heavy crude oil is injected. The reservoir oil 1 in the reservoir 2 has a viscosity of e.g. 0,4 - 0,8 cP (at temperature of about 100 °C and pressure of about 200 - 400 bar). The injected heavy crude oil has a higher viscosity of e.g. 10 - 1.000 cP or even more, e. g. 10.000 cP. The flooding water 4 has a higher viscosity (e. g. at least 0,9 cP) compared with the reservoir oil e.g. 0,6. As a result of the heavy crude oil injection, the heavy crude oil 3 (Figure 3) will push the flooding water 4 into areas of the reservoir 2, which have not been reached before. Thus, trapped reservoir oil 1 can be mobilized and driven to the production well 20. Injection pressure of the heavy crude oil is selected depending on the reservoir conditions, in particular depending on a recovery rate measured at the production well 20. Typically, the injection pressure is at least 10 - 60 bar above the pore pressure of typically 300 - 500 bar, but usually less than the partial pressure. The time scale of the flooding steps depends on the permeability of the reservoir, the front of flooding oil can move e. g. with about 1 - 30 cm per day.

The operation principle schematically illustrated in Figure 1 to 3 can be amended such that a vertical injection is provided. Furthermore, the injection line can be shifted to different portions, even as horizontal wells, of the reservoir 2 for water and oil injection and production.

During the oil recovery at the production well 20, the recovered oil can be analysed, e.g. by chromatography. Depending on the result of the chromatographic analysis, the composition of the recovered oil can be evaluated. As long as the recovered oil substantially comprises the reservoir oil, further heavy crude oil is injected to the reservoir 2. If heavy crude oil is detected in the recovered oil, the oil injection is stopped and replaced by a water injection. Oil and water injections can be changed in a alternating manner, e.g. 2, 4, 6, 10 or more cycles of water and oil injections can be provided for implementing the inventive EOR method.

The features of the invention disclosed in the above description, the drawings and the claims can be of significance both individually as well as in combination for the realization of the invention in its various embodiments.

## Claims

1. Method of enhanced oil recovery of remaining reservoir oil (1) from a subterranean geological reservoir (2), which has been subjected to at least one of a primary oil recovery and a secondary oil recovery, said enhanced oil recovery method comprising the steps of:
- oil flooding the geological reservoir (2) using flooding oil (3), and
- recovering the reservoir oil (1) from the geological reservoir (2).

2. Method according to claim 1, wherein the reservoir has been subjected to the primary oil recovery only, said enhanced oil recovery method comprising the step of:
- water flooding the geological reservoir using flooding water (4) before the step of oil flooding.

3. Method according to one of the forgoing claims, comprising the further steps of:
- alternately repeating water flooding and oil flooding the geological reservoir (2) at least once.

4. Method according to one of the forgoing claims, wherein:
- the flooding oil (3) has a viscosity higher than the viscosity of the reservoir oil (1).

5. Method according to claim 4, wherein
- the flooding oil (3) comprises heavy crude oil being recovered from another geological reservoir.

6. Method according to claim 4 or 5, wherein
- the flooding oil (3) has a viscosity of at least 1 cp at the reservoir conditions.

7. Method according to one the claims 1 to 3, wherein
- the flooding oil (3) has the same viscosity as the reservoir oil (1) to be recovered.

8. Method according to claim 7, wherein
- the flooding oil (3) consists of the reservoir oil (1) being recovered during the primary or secondary oil recovery.

9. Method according to one of the forgoing claims, wherein
- the flooding water (4) includes a viscosity increasing substance.

10. Method according to claim 9, wherein
- the viscosity increasing substance comprises higher viscosity than the oil in place at reservoir conditions.

11. Method of using heavy crude oil (3) for oil flooding a subterranean geological reservoir (2) and enhanced oil recovery from the geological reservoir (2).
